# EUROPÄISCHE PATENTSCHRIFT

(11) **EP 3 061 889 B1**
(45) Veröffentlichungstag und Bekanntmachung des Hinweises auf die Patenterteilung: **31.01.2018**
(21) Anmeldenummer: 16157572.5
(22) Anmeldetag: 26.02.2016
(51) Int. Cl.: E04F 15/04, E04F 15/02, B44F 1/06, B27D 1/00, B32B 21/14

(54) **BELEUCHTBARE VERBUNDPLATTE**
COMPOSITE PANEL WHICH CAN BE ILLUMINATED
PLAQUE COMPOSITE POUVANT ÊTRE ÉCLAIRÉE

(30) Priorität: 27.02.2015 DE 102015203597
(43) Veröffentlichungstag der Anmeldung: 31.08.2016
(73) Patentinhaber: Alfred Seehafer Ges.m.b.H. Holz- und Kunststoff-Verarbeitung, 22453 Hamburg (DE)
(72) Erfinder: Reinhardt, Alex, 22145 Stapelfeld (DE)
(74) Vertreter: Knoop, Philipp

(56) Entgegenhaltungen:
- WO-A1-2007/081254
- WO-A1-2010/072794
- WO-A1-2014/128353
- DE-U1-202006 002 940

## Beschreibung

Die Erfindung betrifft eine Verbundplatte für die dekorative Verkleidung sichtbarer Flächen von Gebäuden, Möbeln, Dekorobjekten, Präsentationsmitteln, mit einer an der zu verkleidenden Fläche zu befestigenden Trägerschicht, die mit einer der Fläche abgewandten, im gebrauchsfertigen Zustand der Verkleidung sichtbaren Deckschicht verbunden ist. Derartige Verbundplatten sind insbesondere als Wand-, Möbel-, Boden- oder Deckenverkleidungen von Innenräumen bekannt, insbesondere in Form von Paneelen. Dabei gibt die Trägerschicht der Verbundplatte die notwendige Festigkeit und dient auch zur Befestigung an der zu verkleidenden Fläche. Im gebrauchsfertigen Zustand ist die Trägerschicht nicht mehr sichtbar. Die Deckschicht enthält das eigentliche Dekor, beispielsweise in Form eines Holzfurniers, welches nach Montage der Verbundplatten allein sichtbar ist. Die Deckschicht besteht in der Regel aus teurerem Material als die Trägerschicht und wird aus Kostengründen daher vorzugsweise sehr dünn ausgestaltet.
Aus der WO 2010/072 794 A1 ist eine Verbundplatte der eingangsgenannten Art bekannt, bei der eine Deckschicht mit dekorativen Schlitzen versehen ist, durch die Licht nach außen dringt.
Aus der WO 2014/128 353A1 und der WO 2007/081 254A1 sind Hinweiselemente bekannt, die beispielsweise auf einen Notausgang hinweisen, wobei der Hinweis nur bei eingeschalteter Hintergrundbeleuchtung sichtbar ist.
Aus der DE 20 2006 002 940U1 ist eine beleuchtbare Fliese bekannt, bei der zwischen einer oberen und einer unteren Deckschicht eine Elektrolumineszenz-Folienlampe und eine punktuell lichtdurchlässige Schicht angeordnet ist, um ein dekoratives Muster bereitzustellen.

Aufgabe der Erfindung ist es, eine gattungsgemäße Verbundplatte zu verbessern, so dass reizvolle optische Lichteffekte sichtbar sind.

Die erfindungsgemäße Lösung besteht darin, dass das Abdeckmaterial aus Holzfurnier besteht, welches unregelmäßig gebrochen wurde, wobei die Bruchstücke in unregelmäßigen Abständen zueinander auf die Trägerschicht aufgeklebt sind und die zwischen den Bruchstücken verbleibenden Fugen lichtdurchlässige Teilbereiche bilden. Die Verwendung von Holzfurnier ist zur Gestaltung der Oberflächen gebräuchlicher Paneele üblich, so dass geeignetes Holzfurnier in allen Variationen kostengünstig zur Verfügung steht. Zur Herstellung der erfindungsgemäßen Verbundplatten wird handelsübliches Holzfurnier so zerbrochen, dass längere Bruchstücke mit unregelmäßigen Kanten entstehen, die auf die transparente Platte der erfindungsgemäßen Verbundplatte im Abstand zueinander aufgeklebt werden, so dass zwischen den Holzfurnierstücken längere Fugen als lichtdurchlässige Teilbereiche verbleiben. Ein derartiges Dekor ist auf relativ einfache Weise und relativ kostengünstig herstellbar.

Die Erfindung kann noch verbessert werden, indem die lichtdurchlässigen Teilbereiche mit transparentem, wahlweise gefärbtem Material vorzugsweise mit Epoxidharz gefüllt sind. Das Auffüllen der verbleibenden Fugen zwischen den Bruchstücken erfolgt nach dem Aufbringen des Abdeckmaterials (Holzfurniers), indem man die Fugen mit Epoxidharz oder einem anderem transparenten Material aufgefüllt, welches flüssig auftragbar ist. Besondere optische Effekte können durch Färben des transparenten Materials erzielt werden.

In einer einfachen Ausgestaltungsform der Erfindung ist die transparente Platte als Acrylplatte ausgestaltet, die mit dem Abdeckmaterial verbunden ist, vorzugsweise mittels Kleber. Acrylplatten sind weit weniger stoßempfindlich und zudem leichter als beispielsweise Glasplatten und aufgrund ihrer Transparenz für die Zwecke der vorliegenden Erfindung bestens geeignet. Sie lassen sich mit beliebigen anderen Materialien verkleben und dienen zur Weiterleitung und Verteilung des von der Beleuchtung gelieferten Lichtes.

Eine weitere Ausgestaltung der Erfindung sieht vor, dass die Trägerschicht eine an der zu verkleidenden Fläche befestigbare Grundplatte und eine mit der Grundplatte, vorzugsweise mittels Kleber, verbundene Trägerplatte aufweist, an der die Deckschicht befestigt ist, vorzugsweise mittels Kleber.

Die Grundplatte und die Trägerplatte können aus Holzmaterial bestehen, beispielsweise aus Pressspanplatten, Wabenplatten, Leichtbauplatten, Sperrholzplatten, verleimten Holzstreifen oder massiven Holzplatten. Dieses Material ist sehr kostengünstig und aufgrund seiner allgemeinen Verbreitung besonders leicht zu beschaffen.

Zur Verbindung der Verbundplatten in Form von Paneelen untereinander wird vorgeschlagen, dass die Trägerschicht an ihren äußeren Schmalseiten mit Nut-und-Feder- Fräsungen versehen ist, die zur Verbindung des Paneels mit benachbarten Paneelen der Verkleidung dienen. Diese Maßnahme ermöglicht das einfache Zusammenstecken einzelner Paneele bei der Herstellung von Verkleidungen.

In weiterer Ausgestaltung der Erfindung ist die Grundplatte mit Leuchtmitteln versehen, die längs eines oder mehrerer streifenförmiger Bereiche, die sich zumindest über einen Teil der Länge oder Breite, vorzugsweise über die gesamte Länge oder Breite der Verbundplatte erstrecken, aneinandergereiht angeordnet sind, wobei die Trägerplatte mit streifenförmigen Ausfräsungen versehen ist, die sich einerseits über die gesamte Dicke der Trägerplatte und andererseits angrenzend an den oder die streifenförmigen Bereiche der Leuchtmittel erstrecken, so dass das Licht der Leuchtmittel durch die Ausfräsungen hindurch zur Deckschicht gelangt. Durch diese Maßnahme haben die Leuchtmittel einen definierten Abstand von der Deckschicht, so dass die Lichtverteilung, die direkt am Leuchtmittel aus einer Reihe heller Punkte besteht, im Bereich der Deckschicht vergleichmässigt wird und als ein im wesentlichen gleichmäßig heller Leuchtstreifen erscheint.

Besonders gute Ergebnisse erzielt man, wenn als Leuchtmittel LED-Bänder verwendet werden. LED-Bänder enthalten bereits mehrere aneinandergereiht angeordnete LEDs, die auf einem Band montiert sind. Ein solches LED-Band benötigt wenig Einbauraum und kann auch unter beengten Verhältnissen auf einfache Weise mit wenigen Handgriffen montiert werden.

Ausführungsbeispiele der Erfindung werden nachfolgend anhand der Zeichnungen näher erläutert. Die Figuren zeigen im Einzelnen:
- Figur 1:: in schematischer Darstellung eine perspektivische Ansicht einer erfindungsgemäßen Verbundplatte in einer ersten Ausführungsform mit Acrylplatte;
- Figur 2:: eine Draufsicht auf eine Grundplatte der Verbundplatte von Figur 1 mit einer schematischen Darstellung der Leuchtmittel;
- Figur 3:: eine Teilansicht in geschnittener Darstellung der Schmalseiten zweier Verbundplatten in einer zweiten Ausführungsform als Paneele, die mit Nut-und-Feder-Fräsungen versehen sind;
- Figur 4:: eine Ansicht wie in Figur 1 einer erfindungsgemäßen Verbundplatte in einer dritten Ausführungsform ohne Acrylplatte.

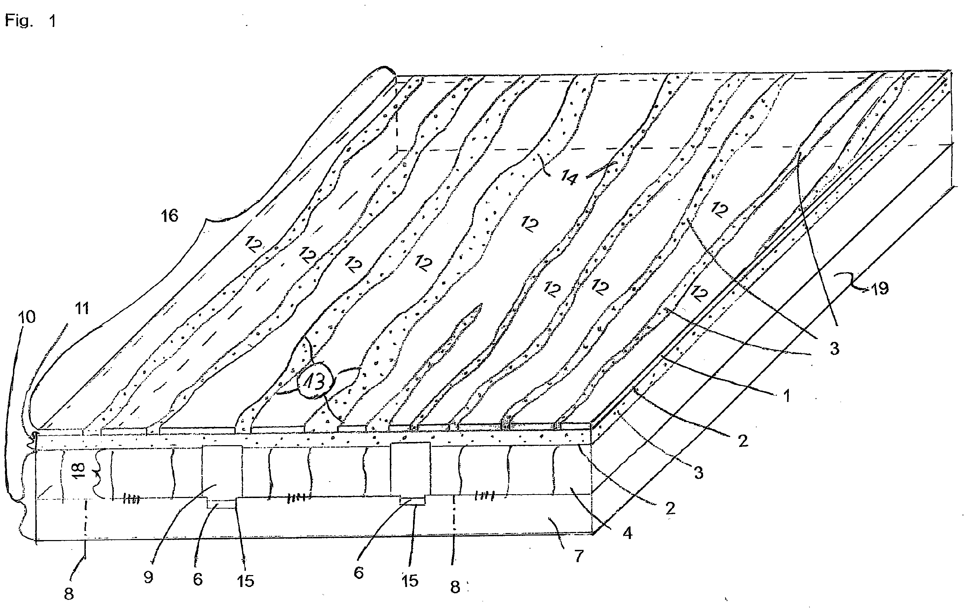

In Figur 1 erkennt man eine erfindungsgemäße Verbundplatte, welches aus einer stabilen Trägerschicht 10 aus Holzmaterial und einer die dekorative Wirkung erzeugenden Deckschicht 11 zusammengesetzt ist. Die Trägerschicht 10 besteht aus einer Grundplatte 7 und einer Trägerplatte 4.

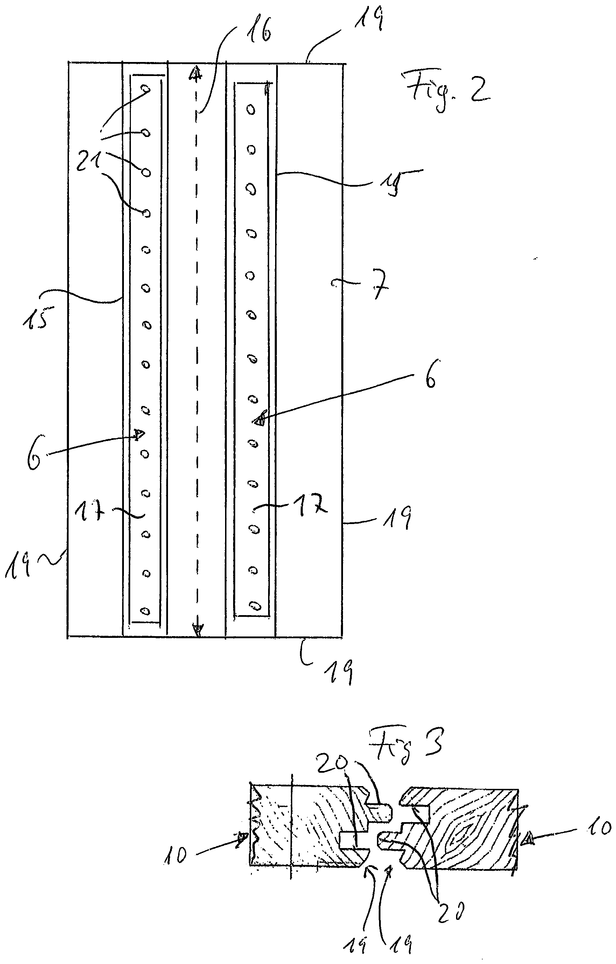

Die Grundplatte 7 ist in Figur 2 in einer Draufsicht dargestellt. Sie ist mit streifenförmigen Bereichen 15 für die Aufnahme der Beleuchtung 6 versehen. Die streifenförmigen Bereiche erstrecken sich über die gesamte Länge 16 der Grundplatte 7 und sind im Abstand zueinander angeordnet. Die Leuchtmittel 6 bestehen aus LED-Bändern 17, die sich über die streifenförmigen Bereiche 15 erstrecken. Jedes LED-Band 17 besitzt eine Vielzahl von Leuchtdioden 21, die im gegenseitigen Abstand zueinander längs des LED-Bandes aneinandergereiht angeordnet sind. Je nach zu erzielender optischer Wirkung kann jede Verbundplatte ein, zwei oder noch mehr streifenförmige Bereiche 15 mit Leuchtmitteln 6 aufweisen.

Wie man wiederum in Figur 1 erkennt, ist die Trägerplatte 4 mit streifenförmigen Ausfräsungen 9 versehen, die sich über die gesamte Dicke 18 der Trägerplatte 4 erstrecken und somit streifenförmige Durchbrüche oder Fensterausschnitte bilden, durch die das Licht der Leuchtmittel 6 hindurch treten kann, um zur Deckschicht 11 zu gelangen. Die streifenförmigen Ausfräsungen 9 erstrecken sich daher entlang der streifenförmigen Bereiche 15 der Grundplatte 7, ohne die Leuchtmittel 6 abzuschatten. Die streifenförmigen Ausfräsungen 9 können zur Erzeugung unterschiedlicher optischer Effekte in verschiedener Breite ausgefräst werden.

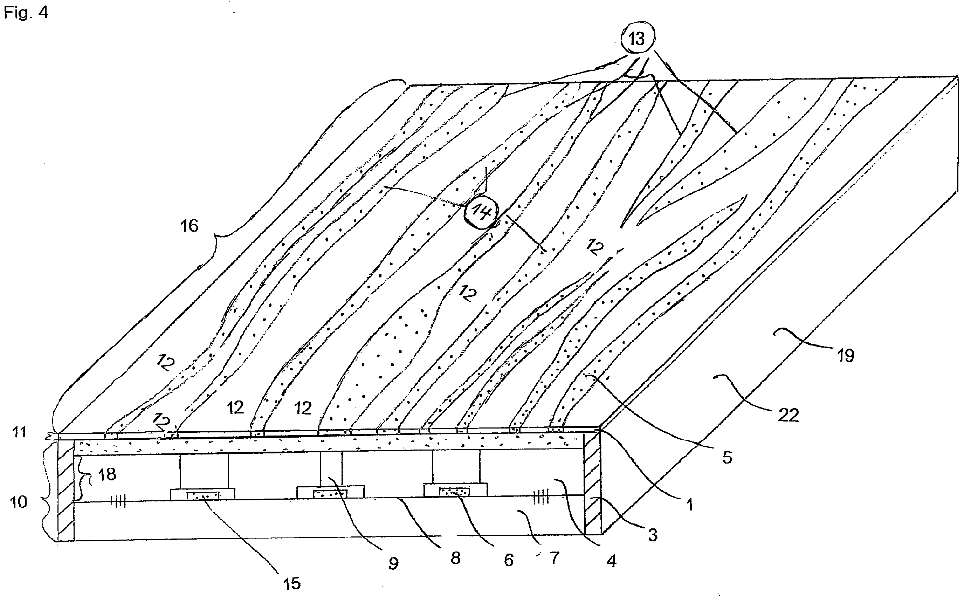

Wie man am besten in Figur 3 erkennt, sind die Schmalseiten 19 der Trägerschichten 10 der erfindungsgemäßen Verbundplatten in einer Ausführungsform als Paneele jeweils mit einer Nut-und-Feder-Fräsung 20 versehen, die zur einfachen Verbindung der Paneele untereinander dienen. Dadurch lässt sich eine Verkleidung auf einfache Weise durch Zusammenstecken von Paneelen erzeugen. Es sind auch andere Verbindungen zwischen den Paneelen möglich, insbesondere Steckverbindungen. Ber Verwendung der Verbundplatten als Möbelfronten sind keine Fräsungen an den Schmalseiten 19 erforderlich. Siehe Beschreibung zu Figur 4.

Die Trägerschicht 10 besteht bei dem vorliegenden Ausführungsbeispiel aus zwei massiven Holzplatten, nämlich der Trägerplatte 4 und der Grundplatte 7, die miteinander verklebt sind. Die Befestigung an der zu verkleidenden Fläche, beispielsweise der Wandfläche eines Gebäudes oder der Außenfläche eines Möbel erfolgt beispielsweise mittels Verschraubung der Grundplatte 7 mit der zu verkleidenden Wandfläche. In Figur 1 ist eine solche Verschraubung 8 durch Strichelungen symbolisch dargestellt. Es kann aber auch jede andere passende mechanische Verbindung der Verbundplatten mit den zu verkleidenden Oberflächen vorgesehen sein, z.B. mittels Krallen.

Die Deckschicht 11 besteht in der usführungsform von Figur 1 aus einer transparenten Acrylplatte 3 und der eigentlichen Dekorschicht 1, die auf der sichtbaren Außenseite der Verbundplatte befestigt ist. Die Acrylplatte 3 wird auf die Trägerplatte 4 aufgeklebt. Bei der Ausführungsform von Figur 4 fehlt die Acrylplatte 3. Die Dekorschicht 1 ist direkt auf die Trägerplatte 4 aufgeklebt.

Die Dekorschicht 1 besteht aus länglichen Bruchstücken eines Holzfurniers als Abdeckmaterial, die auf die Acrylplatte 3 aufgeklebt sind und damit Abdeckbereiche 12 definieren, durch die das Licht der Beleuchtung 6 nicht oder nur sehr abgeschwächt hindurch treten kann. Des Weiteren besteht die Dekorschicht aus transparenten Teilbereichen 5, welche aus Fugen 13 gebildet werden, die zwischen den Bruchstücken des Abdeckmaterials 12 verbleiben und mit Epoxidharz ausgefüllt wurden.

Somit haben wir eine Dekorschicht 1, in der transparente Teilbereiche 5 aus Epoxidharz mit Holzfurnierstücken 12 abwechseln. Das von der Beleuchtung 6 kommende Licht tritt durch die Ausfräsungen 9 der Trägerplatte 4 hindurch und trifft auf die Acrylplatte 3, die es durchdringt. Trifft es danach auf ein Stück Holzfurnier, wird es nicht oder nur zu einem ganz geringen Teil an die dekorative Oberfläche der Dekorschicht 1 gelangen. Trifft das Licht hingegen auf einen transparenten Teilbereich 5 aus Epoxidharz, so wird es im Muster der transparenten Teilbereiche 5 hindurch gelassen und erzeugt auf diese Weise einen sehr attraktiven Leuchteffekt an der Dekorschicht 1 der erfindungsgemäßen Verbundplatte. Dabei können die optischen Effekte noch variiert werden, indem das transparente Material 14 gefärbt wird.

Die Deckschicht wird vorzugsweise durch das nachfolgend beschriebene Verfahren hergestellt.
a - die transparente Platte 3 aus Makrolon oder einem anderen transparenten Material wird zugeschnitten, angeraut und danach gesäubert;
b - auf die Makrolonplatte 3 wird Kontaktkleber 2 aufgetragen;
c - Holzfurnier, vorzugsweise Starkfurnier wird in unregelmäßige Bruchstücke zerbrochen und diese im Abstand zueinander auf die Makrolonplatte 3 aufgeklebt, so dass zwischen den Bruchstücken 12 Fugen 13 verbleiben;
d - die Enden der Fugen 13 am Rand der Makrolonplatte 3 werden mit einem später leicht entfernbaren, zum Beispiel abschleifbaren elastischen Material verschlossen;
e - die Fugen 13 werden mit Epoxidharz ausgegossen.

Vor, nach oder gleichzeitig mit den vorbeschriebenen Verfahrensschritten wird die Trägerschicht 10 hergestellt, indem
- eine Grundplatte 7 aus Holz mit streifenförmigen Leuchtmitteln 6 versehen wird,
- eine Trägerplatte 4 aus Holz mit streifenförmigen, durch die gesamte Dicke 18 der Trägerplatte 4 hindurch gehenden Ausfräsungen 9 versehen wird, und
- die Trägerplatte 4 mit der Grundplatte 7 verleimt wird, wobei die Ausfräsungen 9 über den Leuchtmitteln 6 angeordnet werden.

Schließlich wird die Fertigung der Verbundplatte mit den folgenden Arbeitsschritte vollendet:
f - die transparente Platte 3 aus Makrolon oder einem anderen transparenten Material wird mit der Trägerschicht 10 verklebt;
g - die zusammengesetzte Verbundplatte wird auf Maß geschnitten und anschließend auf Maß geschliffen, bei Paneelen zwischen 160 mm und 320 mm Breite, bei Möbelfronten oder anderen Anwendungen auf die erforderliche Breite;
h - bei der Herstellung von Paneelen werden an den Schmalseiten 19 der Paneele Nut-und-Feder-Fräsungen 20 oder andere Verbindungen eingefräst, bei Möbelfronten wird dieser Arbeitsschritt ausgelassen;
i - die Kanten der Verbundpaltte werden beschliffen und ausgebürstet;
j - die Oberflächen der Verbundplatte werden grundiert oder geölt oder gebeizt und gekalkt;
k - die Dekorschicht der Verbundplatte wird lackiert, gegebenenfalls nach weiteren Maßnahmen zur Erzeugung bestimmter optischer Effekte.

Die Beleuchtung 6 der erfindungsgemäßen Verbundplatten kann auch so ausgestaltet sein, dass beispielsweise LED-Bänder elektronisch dimmbar oder farblich anpassbar sind. Dies kann durch die Ansteuerung verschiedenfarbiger LEDs (insbesondere bei LED-Bändern mit RGB) geschehen, wodurch warmes Licht oder kaltes Licht oder ein dekorativer Farbwechsel erzeugt werden kann. Grundsätzlich sind diese Effekte auch mit anderen Leuchtmitteln möglich. So umfasst die Erfindung selbstverständlich auch jede Art geeigneter Leuchtmittel, insbesondere Leuchtstoffröhren, wobei Lichtelemente mit Breitfachwinkel zu bevorzugen sind. Auch lichtleitende Glasfasern können zur Erzielung besonderer optischer Effekte eingesetzt werden.

Die in Figur 4 gezeigte Ausführungsform hat eine abgewandelte Verbundplatte für Möbeloberflächen. Der streifenförmige Bereich 15 ist hier als breite Ausfräsung ausgestaltet, die etwa 4 mal breiter als die Ausfräsung 9 ausgestaltet ist. Dadurch lassen sich besondere optische Effekte erzielen. Da die Schmalseiten 19 bei Möbelfronten nicht mit Nachbarplatten verbunden werden, sind sie hier mit streifenförmigem Material 22 abgedeckt. Die gesamte Dicke der erfindungsgemäßen Möbelfronten kann in unterschiedlichen Materialstärken ausgeführt sein.

Die erfindungsgemäßen Verbundplatten können als Wandpaneele Verwendung finden, aber auch für Fußböden, Fußleisten, beliebige Verkleidungen, Waschbecken, Badewannen, Arbeitsplatten, Sitzelemente, Tresen, Möbelfronten, Möbelkorpusse, Firmenlogos, dekorative Objekte jeglicher Art, die insbesondere aus Holz herstellbar sind. In einer weiteren Ausführungsform können aber auch die sichtbaren Glattflächen aus einem anderen Material bestehen, welches vorzugsweise mit Buntlack versehen wird.

### BEZUGSZEICHENLISTE

- 1: Dekorschicht
- 2: Kleber
- 3: transparente Platte, Acrylplatte
- 4: Trägerplatte
- 5: transparente Teilbereiche
- 6: Beleuchtung/Leuchtmittel
- 7: Grundplatte
- 8: Verschraubung
- 9: Ausfräsung
- 10: Trägerschicht
- 11: Deckschicht
- 12: Bruchstücke Abdeckmaterial/ Abdeckbereich
- 13: Fugen
- 14: transparentes Material
- 15: streifenförmiger Bereich
- 16: Länge
- 17: LED-Band
- 18: Dicke
- 19: schmale Seite
- 20: Nut-und-Feder-Fräsung
- 21: Leuchtdioden
- 22: streifenförmiges Material

## Patentansprüche

1. Verbundplatte für die dekorative Verkleidung sichtbarer Flächen von Gebäuden, Möbeln, Dekorobjekten, Präsentationsmitteln, mit einer an der zu verkleidenden Fläche zu befestigenden Trägerschicht (10), die mit einer der Fläche abgewandten, im gebrauchsfertigen Zustand der Verkleidung sichtbaren Deckschicht (11) verbunden ist, wobei die Deckschicht (11) transparente, wahlweise gefärbte Teilbereiche (5) aufweist und die Trägerschicht (10) mit einer Beleuchtung (6) versehen ist, deren Licht durch die transparenten, wahlweise gefärbten Teilbereiche (5) der Deckschicht (11) hindurchtritt, so dass vom Betrachter ein leuchtendes Muster wahrnehmbar ist, wobei die Deckschicht (11) eine mit der Trägerschicht (10) verbundene transparente, wahlweise gefärbte Platte (3) aufweist, die auf ihrer der Trägerschicht (10) abgewandten und dem Betrachter zugewandten Oberfläche mit sichtbarem Abdeckmaterial (12) verbunden ist, welches mehrere sichtbare Abdeckbereiche (12) abdeckt, und dass die verbleibenden, von sichtbarem Abdeckmaterial (12) freien Teilbereiche (5) lichtdurchlässig ausgestaltet sind, **dadurch gekennzeichnet, dass** das Abdeckmaterial (12) aus Hofzfurnier besteht, welches gebrochen wurde, und dass die Bruchstücke (12) im Abstand zueinander auf die Trägerschicht (10) aufgeklebt sind, wobei die zwischen den Bruchstücken (12) verbleibenden Fugen (13) lichtdurchlässige Teilbereiche (5) bilden.

2. Verbundplatte nach Anspruch 1, **dadurch gekennzeichnet, dass** die lichtdurchlässigen Teilbereiche (5) mit transparentem, wahlweise gefärbtem Material (14), vorzugsweise mit Epoxidharz gefüllt sind

3. Verbundplatte nach Anspruch 2, **dadurch gekennzeichnet, dass** das transparente Material (14) gefärbt ist.

4. Verbundplatte nach einem der vorhergehenden Ansprüche, **dadurch gekennzeichnet, dass** die transparente, wahlweise gefärbte Platte (3) als Acrylplatte ausgestaltet ist, die mit dem sichtbaren Abdeckmaterial (12) verbunden ist, vorzugsweise mittels Kleber (2).

5. Verbundplatte nach einem der vorhergehenden Ansprüche, **dadurch gekennzeichnet, dass** die Trägerschicht (10) eine an der zu verkleidenden Fläche befestigbare Grundplatte (7) und eine mit der Grundplatte (7), vorzugsweise mittels Kleber (2), verbundene Trägerplatte (4) aufweist, an der die Deckschicht (11) befestigt ist, vorzugsweise mittels Kleber (2).

6. Verbundplatte nach Anspruch 5, **dadurch gekennzeichnet, dass** die Grundplatte (7) mit Leuchtmitteln (6) versehen ist, die längs eines oder mehrerer streifenförmiger Bereiche (15), die sich zumindest über einen Teil der Länge (16) oder Breite, vorzugsweise über die gesamte Länge oder Breite der Verbundplatte erstrecken, aneinandergereiht angeordnet sind, und dass die Trägerplatte (4) mit streifenförmigen Ausfräsungen (9) versehen ist, die sich einerseits über die gesamte Dicke (18) der Trägerplatte und andererseits angrenzend an den oder die streifenförmigen Bereiche (15) der Leuchtmittel (6) erstrecken, so dass das Licht der Leuchtmittel (6) durch die Ausfräsungen (9) hindurch zur Deckschicht (11) gelangt.

7. Verbundplatte nach Anspruch 6, **dadurch** gekennzeichnnet, dass als Leuchtmittel (6) LED-Bänder verwendet werden.

8. Verbundplatte nach einem der Ansprüche 5 bis 7, **dadurch gekennzeichnet, dass** die Grundplatte (7) und die Trägerplatte (4) aus Holzmaterial bestehen.

9. Verbundplatte nach einem der vorhergehenden Ansprüche, **dadurch gekennzeichnet, dass** zur Verwendung der Verbundplatte als Paneel für die Herstellung von Bodenbelägen oder Wand- oder Deckenverkleidungen die Trägerschicht (10) an ihren äußeren Schmalseiten (19) mit Nut-und-Feder-Fräsungen (20) versehen ist, die zur Verbindung des Paneels mit benachbarten Paneelen des Bodenbelags oder der Wand- oder Deckenverkleidung dienen.

## Claims

1. Composite panel for decoratively cladding visible surfaces of buildings, items of furniture, decorative objects or presentation means, comprising a substrate layer (10) which is to be fastened to the surface to be cladded and is connected to a top layer (11) which is remote from the surface and visible when the cladding is ready to be used, the top layer (11) comprising transparent portions (5) which are optionally coloured, and the substrate layer (10) being provided with an illumination means (6), the light from which passes through the transparent portions (5) of the top layer (11) that are optionally coloured, such that an illuminated pattern can be seen by an observer, the top layer (11) comprising a transparent sheet (3) which is optionally coloured and is connected to the substrate layer (10), and the surface of which that is remote from the substrate layer (10) and faces the observer is connected to visible cover material (12) that covers a plurality of visible cover regions (12), and the remaining portions (5) that are free of visible cover material (12) are permeable to light, **characterised in that** the cover material (12) consists of wood veneer which has been broken up, and **in that** the broken-off pieces (12) are glued to the substrate layer (10) so as to be mutually spaced, the gaps (13) that remain between the broken-off pieces (12) forming portions (5) that are permeable to light.

2. Composite panel according to claim 1, **characterised in that** the portions (5) that are permeable to light are filled with transparent material (14) which is optionally coloured, preferably filled with epoxy resin.

3. Composite panel according to claim 2, **characterised in that** the transparent material (14) is coloured.

4. Composite panel according to any of the preceding claims, **characterised in that** the transparent sheet (3) which is optionally coloured is in the form of an acrylic sheet which is connected to the visible cover material (12), preferably by means of an adhesive (2).

5. Composite panel according to any of the preceding claims, **characterised in that** the substrate layer (10) comprises a base plate (7) that can be fastened to the surface to be cladded, and a carrier plate (4) which is connected to the base plate (7), preferably by means of an adhesive (2), and on which the top layer (11) is fastened, preferably by means of an adhesive (2).

6. Composite panel according to claim 5, **characterised in that** the base plate (7) is provided with light sources (6) which are arranged in a row along one or more strip-shaped regions (15) which extend over at least some of the length (16) or width of the composite panel, preferably over the entire length or width thereof, and **in that** the carrier plate (4) is provided with strip-shaped recesses (9) which extend over the entire thickness (18) of the carrier plate and such that they adjoin the strip-shaped region(s) (15) of the light sources (6), and therefore the light from the light sources (6) travels through the recesses (9) to the top layer (11).

7. Composite panel according to claim 6, **characterised in that** LED strips are used as the light sources (6).

8. Composite panel according to any of claims 5 to 7, **characterised in that** the base plate (7) and the carrier plate (4) are made of wood material.

9. Composite panel according to any of the preceding claims, **characterised in that**, in order to use the composite panel as a panel for producing flooring or wall or ceiling claddings, the outer narrow sides (19) of the substrate layer (10) are provided with portions (20) that have been cut in the manner of tongues and grooves, which portions connect the panel to adjacent panels of the flooring or the wall or ceiling cladding.

## Revendications

1. Plaque composite pour l'habillage décoratif de surfaces visibles de bâtiments, de meubles, d'objets de décoration, de moyens de présentation, avec une couche de support (10) à fixer au niveau de la surface à habiller, laquelle couche de support est reliée à une couche couvrante (11) opposée à la surface, visible dans l'état prêt à l'utilisation de l'habillage, dans laquelle la couche couvrante (11) présente des zones partielles (5) transparentes, colorées au choix et la couche de support (10) est pourvue d'un éclairage (6), dont la lumière traverse les zones partielles (5) de la couche couvrante (11) transparentes, colorées au choix de sorte que l'observateur peut percevoir un motif luminescent, dans laquelle la couche couvrante (11) présente une plaque (3) transparente, colorée au choix reliée à la couche de support (10), laquelle est reliée à un matériau de recouvrement (12) visible sur sa surface opposée à la couche de support (10) et tournée vers l'observateur, lequel matériau de recouvrement recouvre plusieurs zones de recouvrement (12) visibles, et que les zones partielles (5) restantes, sans matériau de recouvrement (12) visible sont configurées de manière à laisser passer la lumière, **caractérisée en ce que** le matériau de recouvrement (12) est constitué d'un placage de bois, qui a été cassé, et que les débris (12) sont collés à distance les uns des autres sur la couche de support (10), dans laquelle les joints (13) restants entre les débris (12) forment des zones partielles (5) laissant passer la lumière.

2. Plaque composite selon la revendication 1, **caractérisée en ce que** les zones partielles (5) laissant passer la lumière sont remplies d'un matériau (14) transparent, coloré au choix, de préférence de résine époxy.

3. Plaque composite selon la revendication 2, **caractérisée en ce que** le matériau (14) transparent est coloré.

4. Plaque composite selon l'une quelconque des revendications précédentes, **caractérisée en ce que** la plaque (3) transparente, colorée au choix est configurée sous la forme d'une plaque acrylique, qui est reliée au matériau de recouvrement (12) visible, de préférence au moyen de colle (2).

5. Plaque composite selon l'une quelconque des revendications précédentes, **caractérisée en ce que** la couche de support (10) présente une plaque de base (7) pouvant être fixée au niveau de la surface à habiller et une plaque de support (4) reliée à la plaque de base (7), de préférence au moyen de colle (2), au niveau de laquelle la couche couvrante (11) est fixée, de préférence au moyen de colle (2).

6. Plaque composite selon la revendication 5, **caractérisée en ce que** la plaque de base (7) est pourvue de moyens d'éclairage (6), qui sont disposés de manière alignée les uns les autres le long d'une ou de plusieurs zones (15) en forme de ruban, qui s'étendent au moins sur une partie de la longueur (16) ou de la largeur, de préférence sur toute la longueur ou la largeur de la plaque composite, et que la plaque de support (4) est pourvue de chanfreins (9) en forme de ruban, qui s'étendent d'une part sur toute l'épaisseur (18) de la plaque de support et d'autre part de manière contiguë à la ou aux zones (15) en forme de ruban des moyens d'éclairage (6) de sorte que la lumière des moyens d'éclairage (6) parvient jusqu'à la couche couvrante (11) en passant par les chanfreins (9).

7. Plaque composite selon la revendication 6, **caractérisée en ce que** des bandes de LED sont utilisées en tant que moyens d'éclairage (6).

8. Plaque composite selon l'une quelconque des revendications 5 à 7, **caractérisée en ce que** la plaque de base (7) et la plaque de support (4) sont constituées d'un matériau en bois.

9. Plaque composite selon l'une quelconque des revendications précédentes, **caractérisée en ce qu'**aux fins de l'utilisation de la plaque composite en tant que panneau pour la fabrication de revêtements de sol ou d'habillages de mur ou de plafond, la couche de support (10) est pourvue au niveau de ses tranches (19) extérieures de fraisages à rainure-languette (20), qui servent à relier le panneau à des panneaux adjacents du revêtement de sol ou de l'habillage de mur ou de toit.
